# EUROPEAN PATENT APPLICATION

(11) **EP 2 293 653 A2**
(43) Date of publication of application: **09.03.2011**
(21) Application number: 09742797.5
(22) Date of filing: 26.02.2009
(51) Int. Cl.: H05B 37/02

(54) **AC-POWERED LED LIGHTING SYSTEM**

(30) Priority: 09.05.2008 KR 20080043347; 09.05.2008 KR 20080043346; 10.05.2008 KR 20080043679; 07.06.2008 KR 20080053420
(71) Applicant: Shim, Hyun Seop, Seoul 139-230 (KR)
(72) Inventor: Shim, Hyun Seop, Seoul 139-230 (KR)
(74) Representative: Banzer, Hans-Jörg
(86) International application number: PCT/KR2009/000924
(87) International publication number: WO 2009/136691

(57) **Abstract**

The present invention relates to an AC-powered LED lighting system made in implementing AC-driven LED lightings that are achieved without the use of a dedicated circuit configuration such as SMPS, etc., but with the help of a simplified rectifier circuit and through adjustment of the number of LEDs. To this end, there is provided a lighting system composed of LED lightings, for which an LED module where LEDs are mounted is driven by an external AC input power. Here, an AC-powered LED lighting system comprises: a power source part receiving AC power from outside for use as a drive source of the system; a rectifying part rectifying the input power by a bridge rectifier circuit; and a LED driving part configured with a plurality of serially connected LEDs in correspondence to the input power, the LED driving part receiving rectified power from the rectifying part to drive the LEDs by a target voltage.

## Description

### Technical Field

The present invention relates to an AC-powered LED lighting system.

More particularly, the present invention relates to an AC-powered LED lighting system made in implementing AC-driven LED lightings that are achieved without the use of a dedicated circuit configuration such as SMPS, etc., but with the help of a simplified rectifier circuit and through adjustment of the number of LEDs. Also, the present invention discloses an AC-powered LED lighting system in that a means for adjusting the luminance of the LED lamp driven by the AC power is provided, thereby controlling the luminance of the LED lamp by wireless through the means. Further, the present invention discloses an AC-powered LED lighting system capable of always supplying a constant power source to the system through a constant current and always checking an imputed current capacity so as to stably drive the system. Moreover, the present invention discloses an AC-powered LED lighting system constructed to produce the LEDs in various colors and express a desired lighting color through a combination of the colors.

### Background Art

In general, as an indoor lighting inside the building, the fluorescent lamp or halogen lamp is typically installed on the ceiling or wall. However, such a fluorescent lamp or halogen lamp still consumes lots of power compared with the general indoor illuminating lamp, mainly providing illumination in a single color. In order to solve the drawbacks of high power consumption and monotony of the illumination as such, an LED illuminating lamp which can produce lighting in various colors with less power consumption than the fluorescent lamp or halogen lamp has been manufactured and sold in the market.

The LED lighting system as described above has been widely used as a main lamp of a household or an office, or a stand lamp on the desk, and exemplifies an illumination tile using a light guiding plate as a much more developed pattern in the preferred embodiment. In the illuminating device as the above, a plurality of LED modules mounted with plural LEDs is placed in a particular arrangement, and the LED modules are installed on the ceiling, the wall surface or the like of an indoor space.

Specifically, the LED module (or illuminating lamp) is provided with an A/D converter to convert the AC power inputted from the outside into the DC power as the LED has characteristics of being driven by a direct current with a proper voltage. At this point, the A/D converter is accompanied by a transformer circuit having a trans-coil to lower the voltage of an alternate current, and the transformer circuit has drawbacks in that since the transformer circuit is arranged occupying a large space in the LED module, the dimension of the product having the same becomes large.

In order to solve the problems as described above, a power supply device called SMPS (Switching Mode Power Supply) has been recently applied to a small illuminating device employed with the LEDs. The SMPS is designed to transform the frequency of the AC power into a high frequency of the DC power, which can embody a much more miniaturized and lighter converting circuit than that of the conventional transformer.

In order to solve the problems in that the above fluorescent lamp or halogen lamp is monotonous, a RGB LED module having LEDs of three primary colors is applied to a color lighting device so as to convert various colors of light in real time and create various color lighting by request of the user.

In the lighting device as the above, a plurality of LED modules mounted with plural LEDs is placed in a particular arrangement, and the LED modules are installed on the ceiling, the wall surface or the like of an indoor space. Specifically, in order to apply the lighting device to an indoor or outdoor advertising lamp, in a status that the plural RGB LEDs is a unit module, the plurality of the unit modules is connected to each other and is placed in the form of a desired advertising lamp to embody the RGB LED module.

### Disclosure

### Technical Problem

The SMPS can embody a much more miniaturized and lighter converting circuit than that of the conventional transformer. Meanwhile, there are also problems in that since the SMPS in the LED illuminating lamp transforms the AC power of 220V into the DC power of 12V to 24V, it requires a considerably large amount of current capacities, causing an energy loss.

Particularly, the SMPS with a high current capacity is a very expensive component, which considerably increases the manufacturing cost of the LED lighting system. Even though the SMPS module has been remarkably miniaturized and light-weighted, compared with the LED module which has been typically manufactured in much smaller size than the SMPS, it is still manufactured in bigger size than the LED module, resulting in limitations on the miniaturization and lightweight of the LED illuminating lamp.

Simultaneously, the conventional illuminating lamp serves to divisionally perform on/off operation thereof according to day and night. However, since the conventional illuminating lamp always emits a constant light, regardless of an existence of human in a desired space or an intensity of light in a indoor according to a brightness of natural light and so on, there is an economical defect in that a lot of energy can be spent.

Specifically, in the conventional illuminating lamp, since the plurality of LED, the power supplier for supplying the external power source to the LED module, and a switching means for turning on/off the LEDs are separately manufactured, it is necessary to destroy specific parts, for example, many parts of the walls of a house or office for installing each construction. Accordingly, when the general fluorescent lamp or halogen lamp is replaced with the LED lamp, additional works are performed, thereby increasing the installation expenses.

Specifically, in the LED modules applied to the outdoor advertising lamp, since the plural LEDs is placed in a particular arrangement, an over current is often applied to the LEDs. That is, since the voltage and current outputted from the power source part is proportionate to the distance, the LEDs adjacent to the power source part is considerably overheated, so that the operation of the LED illuminating lamp is unstable and the life span of the LED is shortened.

Besides, in the LED modules mounted applied to the outdoor advertising lamp, since the unit module having the plural LEDs is arranged in a row, it has a drawback in that the current capacity consumption of the SMPS is considerably increased.

Meanwhile, in the conventional RGB LED module, the lighting lamp can be implemented in various colors during install thereof. However, it can generate only a desired single color. Accordingly, since the user cannot change the lighting in various colors, there is a defect in that it cannot meet the demand of various lighting colors.

Therefore, the present invention has been made in view of the above-mentioned problems, and the primary object of the present invention is to provide an AC-powered LED lighting system in that the power source is rectified through a simplified rectifier circuit so as to input a desired power source, thereby it can reduce manufacturing costs and miniaturize the dimension of a product.

A second object of the present invention is to provide an AC-powered LED lighting system in that any construction for controlling the luminance of the LED lighting is added to any means for rectifying and supplying the AC power to the LED module, specifically the above elements can be integrally formed in one case, and the luminance of the LED lighting can be controlled by wireless, thereby the luminance of the LED lighting can be easily controlled and the LED lighting system can be quickly installed at a low cost.

A third object of the present invention is to provide an AC-powered LED lighting system in that the luminance of the LED lighting can be automatically controlled according to an existence of human, a brightness of natural light, and an elapsed time of a day in an applied space of the LED lighting system, thereby power wasting factors can be minimized.

A fourth object of the present invention is to provide an AC-powered LED lighting system in that the power source having a constant current is always applied to the LED module and a current value is displayed to outside during when an over current is applied to the LED module, thereby the operation of the LED illuminating lamp is always stable and the life span of the LED is increased.

A fifth object of the present invention is to provide an AC-powered LED lighting system in that the user can easily change the lighting color in a desired color, thereby it meets the demand of various lighting colors according a regular control of the colors.

### Technical solution

In accordance with the present invention to achieve the first object thereof, there is provided an AC-powered LED lighting system for receiving an AC power from outside and driving a LED module having LED elements (L), comprising: a power source part for receiving the AC power source from outside for use as a driving source for the system; a rectifying part for rectifying the inputted power source through a bridge rectifier circuit; and a LED driving part configured as a serial connection of the LED elements in response to the rectified power source and driving the LED elements with a desired voltage.

In accordance with the present invention to achieve the second object thereof, there is provided the AC-powered LED lighting system, further comprising: a LED lighting part for receiving the AC power from outside and rectifying the inputted power for driving the LED elements through the power source part and the LED driving part, receiving operating signals inputted by an user, and controlling turning on or off and a luminance of the LED module, the LED lighting part having a wireless communication module for wirelessly receiving the user's operating signals; and a controlling part for inputting the operating signals so as to operate the LED lighting part and having a wireless communication module corresponding to another wireless communication module of the LED lighting part.

Here, the wireless communication module for wirelessly receiving the user's operating signals, a microcomputer for controlling turning on or off and driving luminance of the LED module, and a dimming circuit part for controlling the luminance of the LED module according to control signals of the microcomputer are formed in one case.

Also, a switching part for directly inputting the operating signals through the microcomputer by the user is formed in one case.

Specifically, the controlling part comprises a key inputting part for transmitting the operating signals to the LED lighting part through the wireless communication module and a signal generating part for generating the operating signals so as to transmit the inputted signals to the LED lighting part through the wireless communication module.

In accordance with the present invention to achieve the third object thereof, there is provided an AC-powered LED lighting system, comprising: a sensing part for detecting an existence of human, a brightness of natural light, and an elapsed time of a day in an applied space of the LED lighting system; a microcomputer for generating control signals for controlling a lighting luminance of LEDs in a respond to the detected signals inputted through the sensor; a dimming circuit part for generating driving signals for modulating the driving luminance of the LED elements by PWM controlling the AC power applied from outside through the control signals inputted by the microcomputer; and a LED module for performing a rectification for driving the LED elements according to the driving signals generated through the dimming circuit part, supplying the rectified power source to the LED elements, and performing a function of a LED lighting according to the control signals of the microcomputer.

Here, the LED module comprises: a power source part for receiving the AC power source from outside for use as a driving source for the system; a rectifying part for rectifying the inputted power source through a bridge rectifier circuit; and a LED driving part configured as a serial connection of the LED elements and a resistance in response to the rectified power source and driving the LED elements with a desired voltage.

Also, the dimming circuit part comprises a timer for performing a turning-on process in that the LED elements are gradually lightened during a predetermined setting time and/or a turning-off process in that the LED elements are gradually darkened during a predetermined setting time.

Specifically, the sensing part comprises: a human detecting sensor for detecting an existence of human in a space in which the LED lighting system is applied; a light detecting sensor for detecting an irradiation degree of a sunlight in the applied space of the LED lighting system according to a brightness of natural light; and a time detecting sensor for detecting an elapsed time of a day in connection with a clock and so on.

Also, the AC-powered LED lighting system further comprises a power switching part and a setting switching part for inputting setting signals to the controlling part so as to input on/off and setting status of the LED module, each switching part being an operating panel electrically connected by cable and/or a remote controller electrically connected by wireless.

In accordance with the present invention to achieve the fourth object thereof, there is provided an AC-powered LED lighting system, comprising: a LED module for receiving an AC power from outside and rectifying the AC power to be supplied so as to drive LED elements; and a constant-current circuit part formed in front of the LED module before the power source is supplied to the LED module or next to the rectifying part after it rectifies the power source inputted to the LED module so as to supply a constant current of the power source inputted to the LED module.

Here, the LED module comprises: a power source part for receiving the AC power source from outside for use as a driving source for the system; a rectifying part for rectifying the inputted power source through a bridge rectifier circuit; and a LED driving part configured as a serial connection of the LED elements and a resistance in response to the rectified power source and driving the LED elements with a desired voltage.

Also, the constant-current circuit part comprises two current measuring instruments for measuring a current capacity formed at an input portion of the power source and a supplying portion of the constant-current respectively, two current measuring instruments being electrically connected to a comparator for comparing each current capacity thereof, whereby a current capacity compared by the comparator is converted into a numerical value to be displayed to outside through a displaying device.

Moreover, the constant-current circuit part comprises a microcomputer for judging a supply of the over-current when it compares each current capacity detected by two current measuring instruments through the comparator and displaying results of the judgment to outside through a displaying device.

Specifically, the microcomputer comprises a dimming circuit part for generating control signals for controlling the LED module when the operating signals of the LED module are inputted by an user through a key input part, whereby turning on or off the LED module and controlling the luminance of the Led module according to the inputted control signals.

In accordance with the present invention to achieve the fifth object thereof, there is provided an AC-powered LED lighting system, comprising a bridge diode rectifier circuit part for receiving an AC power source for use as a driving source for the lighting system and converting the received AC power source into a rectifying power for driving a RGB LED to be outputted; a module color controlling circuit part for divisionally supplying the AC power source to each LED of RGB inputted through the bridge diode rectifier circuit part and setting and controlling a lighting color obtained in the end; and a RGB LED driving part having a plurality of LEDs for emitting the light of RGB through the power source inputted by the module color controlling circuit part, each LEDs having a R(red) LEDs group, a G(green) LEDs group, and a B(blue) LEDs group electrically connected in series and the power source inputted by the module color controlling circuit part being distributed to each LED to generate a drop of electric pressure, whereby driving each RGB LEDs according to a desired voltage.

Also, the RGB LEDs groups are divided into a plurality of RGB LEDs division groups to constitute the unit module, each of the RGB LEDs division groups are mounted on each single PCB to constitute unit modules, a plurality of switching circuit parts having identification means is mounted on the unit modules, and the module color controlling circuit part comprises a controlling part for selectively and partially inputting the power source inputted through the bridge diode rectifier circuit part into each of the unit modules and for generating any signals for creating a desired lighting color through a selective on/off of the RGB LEDs division groups and a driving circuit part for receiving the signals generated from the controlling part and driving the switching circuit parts of the unit modules.

Here, the module color controlling circuit part comprises: an operating signal inputting part for selectively driving each of the unite modules and inputting the lighting color of the selected unit module by the user; and a color data table for selecting a corresponding unit module according the signal inputted through the operating signal inputting part and providing a lighting color data to the controlling part by request of the user.

Here, the AC-powered LED lighting system further comprises a constant-current supplying circuit part for always supplying a constant current of the power source rectified and inputted through the bridge diode rectifier circuit part.

### Advantageous Effects

The present invention as described above has advantageous effects in that the inputted power can be converted from the AC to the DC through a simplified configuration to the exclusion of the SMPS, in which a proper number of the LED elements connected with a bridge rectifier circuit are arranged. Moreover, the present invention with the simplified construction as the above has advantageous effects in that since the manufacturing costs are reduced and the dimension of the product is miniaturized, the sales efficiency can be facilitated by reduction of the sales cost of the product, and the application range of the product can be expanded due to the miniaturization of the product.

Particularly, the present invention has advantageous effects in that the luminance of the LED lighting can be controlled, the power supplying means and the dimming circuit part for controlling the luminance are formed in one case, and the luminance of the LED lighting can be controlled by wireless, thereby it can provide convenience in use and the general fluorescent lamp or halogen lamp can be quickly replaced with the LED lamp at a low install cost.

Further, the present invention has advantageous effects in that the luminance of the LED lighting can be automatically controlled according to an existence of human, a brightness of natural light, and an elapsed time of a day in an applied space of the LED lighting system, thereby power wasting factors can be minimized.

Moreover, the present invention has advantageous effects in that the power source having a constant current is always applied to the LED module and a current value is displayed to outside during when an over current is applied to the LED module, thereby the operation of the LED illuminating lamp is always stable and the life span of the LED is increased.

Furthermore, the present invention has advantageous effects in that the user can easily change the lighting color in a desired color, thereby it meets the demand of various lighting colors according a regular control of the colors.

### Brief Description of the Drawings

The foregoing and other objects, features and advantages of the present invention will become more apparent from the following detailed description when taken in conjunction with the accompanying drawings in which:
FIG. 1 is a circuit diagram illustrating a LED module of an AC-powered LED lighting system in accordance with the present invention;
FIG. 2 is a block diagram illustrating an AC-powered LED lighting system in accordance with the present invention;
FIG. 3 is a circuit diagram illustrating a dimming part of the LED lighting system in accordance with the present invention;
FIG. 4 is a block diagram illustrating a LED lighting system in accordance with the present invention;
FIG. 5 is a block diagram illustrating a sensing part of the LED lighting system in accordance with the present invention;
FIG. 6 is a block diagram illustrating a LED lighting system in accordance with the present invention;
FIG. 7 is a circuit diagram illustrating a constant-current circuit part of the LED lighting system in accordance with the present invention;
FIG. 8 is a perspective view illustrating a RGB color LED module in accordance with the present invention;
FIG. 9 is a block diagram illustrating the RGB color LED module in accordance with the present invention;
FIG. 10 is a block diagram illustrating a RGB color LED module having an extending function in accordance with the present invention;
FIG. 11 is a perspective view illustrating an exemplary using state of an embodiment 1 in accordance with the present invention;
FIG. 12 is a sectional view illustrating an exemplary using state of an embodiment 2 in accordance with the present invention; and
FIG. 13 is a sectional view illustrating an exemplary using state of an embodiment 3 in accordance with the present invention.

### <Descriptions on reference numbers for the major components in the drawings>

| | |
|---|---|
| 1: LED lighting part | 1': sensing part |
| 2, 4: wireless communication module | |
| 2': microcomputer | |
| 3: controlling part | 5: microcomputer |
| 10: dimming circuit part | |
| 10':constant-current circuit part | |
| 11: current measuring instruments | |
| 11': timer | |
| 12: comparator | 13: displaying device |
| 14: microcomputer | 20: LED module |
| 40: power source part | 50: rectifying part |
| 51: bridge rectifier circuit | 60: LED driving part |
| 210: bridge diode rectifier circuit part | |
| 220: module color controlling circuit part | |
| 221: controlling part | |
| 222: driving circuit part | |
| 223: operating signal inputting part | |
| 224: color data table | 230: RGB LED driving part |
| 231, 232, 233L R,G, B LEDs groups | |
| 240: unit module | |
| 241, 242, 243: RGB LEDs division groups | |
| 250: constant-current supplying circuit part | |
| L: LED | |

### Best Mode

### Mode for Invention

Hereinafter, exemplary embodiments of the present invention will be described in detail with reference to the accompanying drawings.

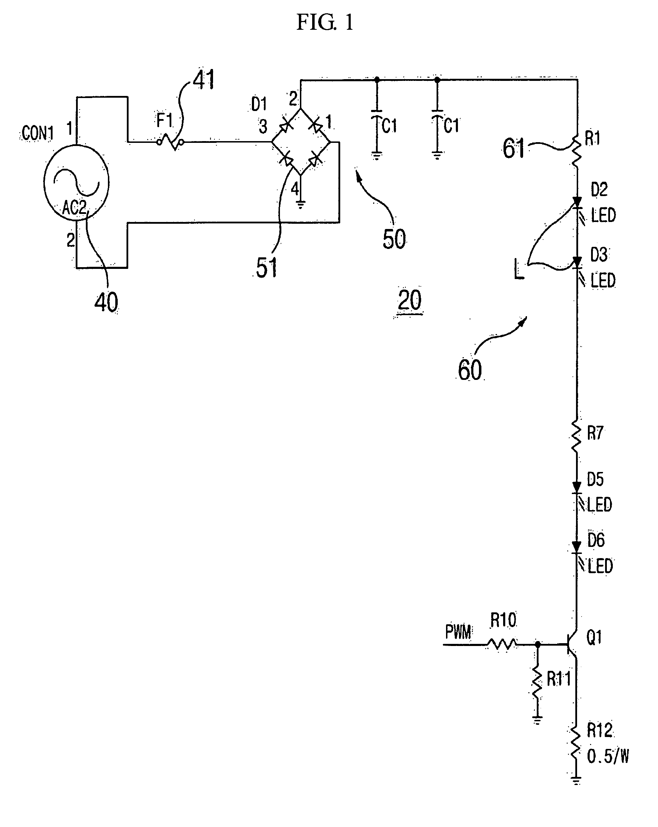

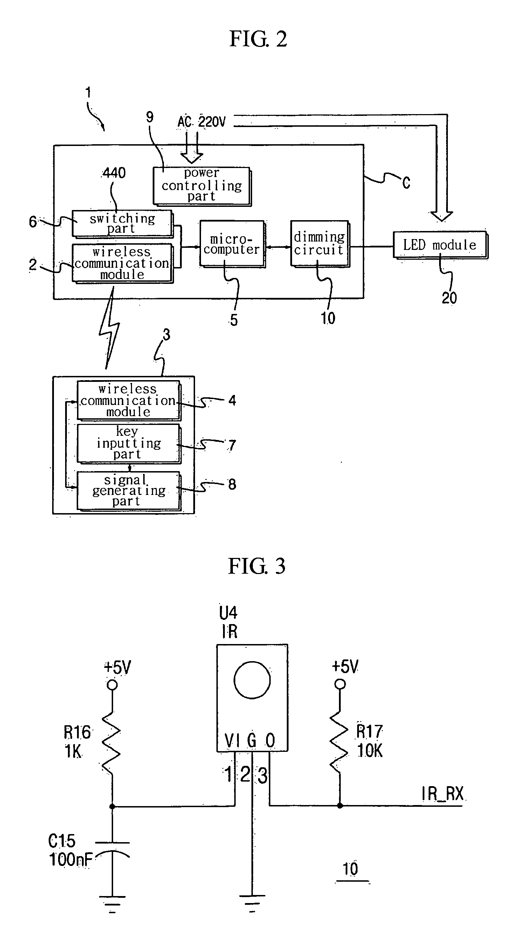

FIG. 1 is a circuit diagram illustrating a LED module of an AC-powered LED lighting system in accordance with the present invention; FIG. 2 is a block diagram illustrating an AC-powered LED lighting system in accordance with the present invention; and FIG. 3 is a circuit diagram illustrating a dimming part of the LED lighting system in accordance with the present invention.

Referring to the drawings, the LED lighting system in accordance with the present invention includes a LED lighting part 1 and a controlling part 3 for wireless controlling the LED lighting part 1. At this time, a plurality of aligned LED elements (L) for emitting a light of the LED lighting system is mounted on a PCB and a variety of electric and electronic elements for driving (turning on or off) the LED elements (L) are mounted on the PCB.

The LED lighting part 1 is designed to receive AC power from outside and rectify the input power for driving the LED elements (L). Also, the LED lighting part 1 serves to receive operating signals inputted by an user and control turning on or off and driving luminance of the LED elements (L). Especially, the LED lighting part 1 includes a wireless communication module 2 for wirelessly receiving the user's operating signals.

More concretely, The LED lighting part 1 includes the wireless communication module 2, a microcomputer 5, a dimming circuit part 10, a switching part 6, and a LED module 20. Here, the wireless communication module 2, the microcomputer 5, the dimming circuit part 5, and the switching part 6 are formed in one case (C).

The wireless communication module 2 is designed to receive the user's operating signals through the controlling part 3. The wireless communication module 2 may be a RF communicator for receiving RF signals, Bluetooth module and so on. Preferably, it may be a RS485.

For reference, the RS485 as an extension version of RS 232 and RS 422 is a kind of a serial communication protocol standard specification. In the RS485, all of the devices can send and receive the data signals through a same line. The RS485 can support both a half duplex mode and a full duplex mode. Also, the maximum numbers of driver and receiver thereof come to 32 respectively. Moreover, it is possible to establish a network with maximum speed of 10Mbps and the longest distance of 1.2km.

That is, the plurality of LED modules 20 and all component formed in one case (c) can be simultaneously controlled through the controlling part 3 controlled by the user by means of the wireless communication module.

The microcomputer 5 is designed to generate control signals for controlling the lighting luminance of the LED (including turning on or off of the LED) in a respond to the operating signals inputted through the wireless communication module 2. The microcomputer 5 includes a memory etc. (not shown), in which the data on switching on and off or luminance control of various lighting devices is stored, so as to generate the control signals corresponding to the inputted operating signals.

The dimming circuit part 10 is designed to generate driving signals for modulating the driving luminance of the LED elements (L) by PWM controlling the AC power applied from outside through the control signals inputted by the microcomputer 5. That is, the dimming circuit part 10 is designed to modulate the driving luminance of the LED elements (L) through PWM (pulse-width modulation) controls by controlling the amount of the current inputted. To this end, the dimming circuit part 10 can be embodied by connecting an infrared interface circuit to the LED module 20.

Especially, the dimming circuit part 10 is designed to perform a turning-on process in that the LED elements (L) are gradually lightened during a predetermined setting time and a turning-off process in that the LED elements (L) are gradually darkened during a predetermined setting time. Also, the dimming circuit part 10 can include a timer (not shown) for setting a lighting time and a darkening time of the lamp.

From this construction, the turning-on process and the turning-off process of the lighting device embodied by the LED elements (L) can be selectively or simultaneously applied.

The switching part 6 is in the form of a key inputting operating panel so as to directly input the operating signals by the user. The switching part 6 is the same as a key inputting part 7 of the controlling part 3 in terms of a construction.

The reference numeral 9 denotes a power controlling part for supplying the power source.

The LED module 20 is a construction for performing the function of the lamp set by the driving signals generated through the dimming circuit part 10. To this end, the LED module 20 has a basic construction including a power source part 40, a rectifying part 50, and a LED driving part 60.

The power source part 40 is a construction for receiving an AC power source for use as a driving source for the illuminating device from the outside. In this embodiment, the external AC power source has a voltage of 220V, a Korean Standard voltage, and the number of the LED elements (L) of the driving part 60 as described below is designated accordingly.

Particularly, the power source part 40 includes a fuse 41 to interrupt the external power source in case of a particular situation. At this moment, the particular situation means that an excessive AC power exceeding the rating is inputted from the outside because of unexpected factors such as a short circuit or the like.

The rectifying part 50 is constructed as a diode circuit to rectify the power source inputted. Here, a bridge rectifier circuit 51 is employed for the diode circuit.

Meanwhile, the LED driving part 60 is configured as a serial connection of a plurality of the LED elements (L) and a resistance 61 in response to the power source of 220 V as described above. The LED driving part 60 is a construction to drive the LED elements (L) with a desired voltage by using the rectified power provided from the rectifying part 50.

In other words, as shown in the drawings, when the external AC power of 220V is inputted and the driving voltage of the LED elements (L) is 3.2V, a stable circuit can be obtained by arranging sixty (60) LED elements (L) to which the voltage of 192V is distributed and applied, while the remaining voltage of 8V being applied to the resistance.

In order to extend the LED driving part 60 more, a plurality of groups, in which plural LED elements (L) and a resistance 61 in series constitute one group, is connected in parallel.

The controlling part 3 is in the form of a remote controller for inputting the operating signals so as to operate the LED lighting part 1. Such a controlling part 3 is configured to include another wireless communication module 4 corresponding to the wireless communication module 2 of the LED lighting part 1.

Especially, the controlling part 3 includes a key inputting part 7 and a signal generating part 8. The key inputting part 7 is a construction of a keypad shape for transmitting the operating signals to the LED lighting part 1 through the wireless communication module 4. Also, the signal generating part 8 is a construction of a signal processor for generating the operating signals so as to transmit the inputted signals to the LED lighting part 1 through the wireless communication module 4.

In the meantime, another embodiment of the present invention will be described in detail with reference to the accompanying drawings.

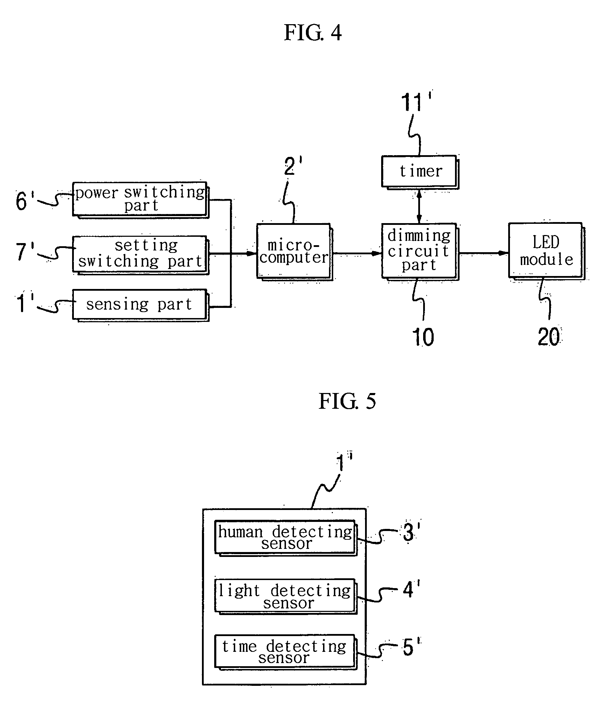

FIG. 4 is a block diagram illustrating a LED lighting system in accordance with the present invention and FIG. 5 is a block diagram illustrating a sensing part of the LED lighting system in accordance with the present invention.

Referring to the drawings, the LED lighting system in accordance with the present invention includes a sensing part 1', a microcomputer 2' applied as a controlling part, a dimming circuit part 10, and a LED module 20. At this time, a plurality of aligned LED elements (L) for emitting a light of the LED lighting system is mounted on a PCB and a variety of electric and electronic elements for driving (turning on or off) the LED elements (L) are mounted on the PCB.

The sensing part 1' is a construction for detecting an existence of human, a brightness of natural light, and an elapsed time of a day in an applied space of the LED lighting system. To this end, the sensing part 1' includes a human detecting sensor 3', a light detecting sensor 4', and a time detecting sensor 5'.

The human detecting sensor 3' serves to detect an existence of human in an indoor space or an outdoor space in which the LED lighting system is applied. For example, the human detecting sensor 3' can be applied in such a manner that the lighting lamp is turned on when the worker is existed in a general office, a home kitchen, or a factory, while the lighting lamp is turned off when the worker is not existed therein.

The light detecting sensor 4' serves to detect an irradiation degree of the sunlight in an applied space of the LED lighting system. This light detecting sensor 4' is applied to a street lamp or an outdoor lamp, so that the lighting lamp can be turned on or off according to a distinction of day and night. Also, the light detecting sensor 4' is applied to an indoor lamp according to the intensity of radiation of the sun coming in the indoor, so that the lighting lamp is automatically turned on in the morning, while the lighting lamp is automatically turned off at night.

That is, by means of the light detecting sensor 4', the lighting lamp such as light of sun can be implemented in the indoor according to the natural biorhythm of the body in that they wake up in the evening and go to bed in the evening.

The time detecting sensor 5' serves to input any signals for controlling the luminance of the lamp according to an elapsed time of a day in connection with a clock of indoor or outdoor etc. That is, the time detecting sensor 5' may be a timer and so on.

The microcomputer 2' is designed to generate control signals for controlling the lighting luminance of the LED in a respond to the detected signals inputted through the sensor 1'. The microcomputer 2' includes a memory etc., in which the data on switching on and off or luminance control of various lighting devices is stored, so as to generate the control signals corresponding to each of the operating signals inputted through the sensor 1'.

The dimming circuit part 10 is designed to generate driving signals for modulating the driving luminance of the LED elements (L) by PWM controlling the AC power applied from outside through the control signals inputted by the microcomputer 2'. That is, the dimming circuit part 10 is designed to modulate the driving luminance of the LED elements (L) through PWM (pulse-width modulation) controls by controlling the amount of the current inputted. To this end, the dimming circuit part 10 can be embodied by connecting an infrared interface circuit to the LED module 20.

Especially, the dimming circuit part 10 is designed to perform a turning-on process in that the LED elements (L) are gradually lightened during a predetermined setting time and a turning-off process in that the LED elements (L) are gradually darkened during a predetermined setting time. Also, the dimming circuit part 10 can include a timer 11' for setting a lighting time and a darkening time of the lamp.

From this construction, the turning-on process and the turning-off process of the lighting device embodied by the LED elements (L) can be selectively or simultaneously applied.

The LED module 20 is a construction for performing the function of the lamp set by the driving signals generated through the dimming circuit part 10. To this end, the LED module 20 has a basic construction including a power source part 40, a rectifying part 50, and a LED driving part 60.

The power source part 40 is a construction for receiving an AC power source as a driving source for the illuminating device from the outside. In this embodiment, the external AC power source has a voltage of 220V, a Korean Standard voltage, and the number of the LED elements (L) of the driving part 60 as described below is designated accordingly.

Particularly, the power source part 40 includes a fuse 41 to interrupt the external power source in case of a particular situation. At this moment, the particular situation means that an excessive AC power exceeding the rating is inputted from the outside because of unexpected factors such as a short circuit or the like.

The rectifying part 50 is constructed as a diode circuit to rectify the power inputted. Here, a bridge rectifier circuit 51 is employed for the diode circuit.

Meanwhile, the LED driving part 60 is configured as a serial connection of a plurality of the LED elements (L) and a resistance 61 in response to the power source of 220 V as described above. The LED driving part 60 is a construction to drive the LED elements (L) with a desired voltage by using the rectified power provided from the rectifying part 50.

In other words, as shown in the drawings, when the external AC power of 220V is inputted and the driving voltage of the LED elements (L) is 3.2V, a stable circuit can be obtained by arranging sixty (60) LED elements (L) to which the voltage of 192V is distributed and applied, while the remaining voltage of 8V being applied to the resistance.

In order to extend the LED driving part 60 more, a plurality of groups, in which plural LED elements (L) and a resistance 61 in series constitute one group, is connected in parallel.

The LED lighting system further includes a power switching part 6' and a setting switching part 7' for inputting setting signals to the controlling part 2' so as to input on/off and setting status of the LED module 20.

Each switching part 6 and 7 may be an operating panel electrically connected by cable and/or a remote controller electrically connected by wireless, thereby providing convenience in use.

In the meantime, further another embodiment of the present invention will be described in detail with reference to the accompanying drawings.

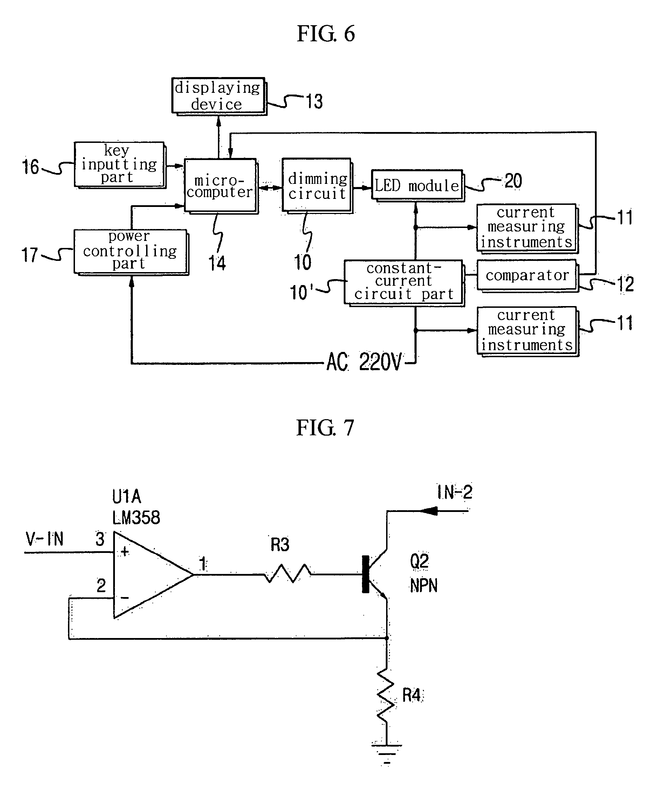

FIG. 6 is a block diagram illustrating a LED lighting system in accordance with the present invention and FIG. 7 is a circuit diagram illustrating a constant-current circuit part of the LED lighting system in accordance with the present invention.

Referring to the drawings, the LED lighting system in accordance with the present invention includes a LED module 20 and a constant-current circuit part 10' for always maintaining a constant current of the power source supplied to the LED module 20. At this time, a plurality of aligned LED elements (L) for emitting a light of the LED lighting system is mounted on a PCB and a variety of electric and electronic elements for driving (turning on or off) the LED elements (L) are mounted on the PCB.

The LED module 20 is a construction for performing the function of the lamp set by the driving signals generated through the dimming circuit part 10. To this end, the LED module 20 has a basic construction including a power source part 40, a rectifying part 50, and a LED driving part 60.

The power source part 40 is a construction for receiving an AC power source which is a driving source for the illuminating device from the outside. In this embodiment, the external AC power source has a voltage of 220V, a Korean Standard voltage, and the number of the LED elements (L) of the driving part 60 as described below is designated accordingly.

Particularly, the power source part 40 includes a fuse 41 to interrupt the external power source in case of a particular situation. At this moment, the particular situation means that an excessive AC power exceeding the rating is inputted from the outside because of unexpected factors such as a short circuit or the like.

The rectifying part 50 is constructed as a diode circuit to rectify the power inputted. Here, a bridge rectifier circuit 51 is employed for the diode circuit.

Meanwhile, the LED driving part 60 is configured as a serial connection of a plurality of the LED elements (L) and a resistance 61 in response to the power source of 220 V as described above. The LED driving part 60 is a construction to drive the LED elements (L) with a desired voltage by using the rectified power provided from the rectifying part 50.

In other words, as shown in the drawings, when the external AC power of 220V is inputted and the driving voltage of the LED elements (L) is 3.2V, a stable circuit can be obtained by arranging sixty (60) LED elements (L) to which the voltage of 192V is distributed and applied, while the remaining voltage of 8V being applied to the resistance.

In order to extend the LED driving part 60 more, a plurality of groups, in which plural LED elements (L) and a resistance 61 in series constitute one group, is connected in parallel.

The constant-current circuit part 10' is a construction for supplying a constant current of the power source inputted to the LED module 20. The constant-current circuit part 10' can be selectively formed in front of the LED module 20 before the power source is supplied to the LED module 20 or next to the rectifying part 50 after it rectifies the power source inputted to the LED module 20 through the bridge rectifier circuit 51 of the rectifying part 50.

FIG. 7 illustrates a construction of an OP amplifier shape as the constant-current circuit part 10'. Here, the constant-current circuit part 10' may be manufactured in many forms. However, preferably, it is a constant-current IC of one chip shape so as to more simplify the circuit construction.

Also, the constant-current circuit part 10' includes two current measuring instruments 11 for measuring a current capacity formed at an input portion of the power source and a supplying portion of the constant-current, respectively. Here, two current measuring instruments 11 are electrically connected to a comparator 12 for comparing each current capacity thereof. With this construction, the current capacity compared by the comparator 12 is converted into a numerical value to be displayed to outside through a displaying device 13 such as a LCD panel or a 7-segment etc. thereby the manager can frequently check and monitor it.

Especially, the constant-current circuit part 10' includes a microcomputer 14. This microcomputer 14 serves to receive the compared data and judge a supply of the over-current when it compares each current capacity detected by two current measuring instruments 11 through the comparator 12. Here, the results of the judgment are displayed to outside through the image and sound displaying device 13 such as a LCD panel, a 7-segment, a speaker, or buzzer etc.

The microcomputer 14 includes a memory etc. (not shown), in which the data on switching on and off or luminance control of various lighting devices is stored, so as to generate the control signals corresponding to the inputted operating signals.

The microcomputer 14 includes the dimming circuit part 10 shown in FIG. 3. Where the operating signals of the LED module 20 are inputted by the user through a key input part 16, the dimming circuit part 10 serves to generate the control signals for controlling the LED module 20 according to the operating signals inputted into the microcomputer 14, thereby turning on or off the LED module 20 and controlling the luminance of the LED module 20 according to the inputted control signals.

The dimming circuit part 10 is designed to generate driving signals for modulating the driving luminance of the LED elements (L) by PWM controlling the AC power applied from outside through the control signals inputted by the microcomputer 14. That is, the dimming circuit part 10 is designed to modulate the driving luminance of the LED elements (L) through PWM (pulse-width modulation) controls by controlling the amount of the current inputted. To this end, the dimming circuit part 10 can be embodied by connecting an infrared interface circuit to the LED module 20.

Especially, the dimming circuit part 10 is designed to perform a turning-on process in that the LED elements (L) are gradually lightened during a predetermined setting time and a turning-off process in that the LED elements (L) are gradually darkened during a predetermined setting time. Also, the dimming circuit part 10 can include a timer (not shown) for setting a lighting time and a darkening time of the lamp.

From this construction, the turning-on process and the turning-off process of the lighting device embodied by the LED elements (L) can be selectively or simultaneously applied.

The reference numeral 17 denotes a power controlling part for supplying the power source.

In the meantime, according to the present invention, it embodies an LED lighting system powered by an alternating current (AC) through a simplified rectifier circuit and control of the number of LEDs without a dedicated circuit such as SMPS or the like, a plurality of unit modules can be driven through a single power source, so that it can reduce manufacturing costs and miniaturize the dimension of a product and implement energy conservation through a simplified rectifier construction when the LED lighting system is applied to an external advertising lamp, and a constant current of the power source can be always supplied to the LED module, so that it can be operated safely and stably.

In the meantime, further another embodiment of the present invention will be described in detail with reference to the accompanying drawings.

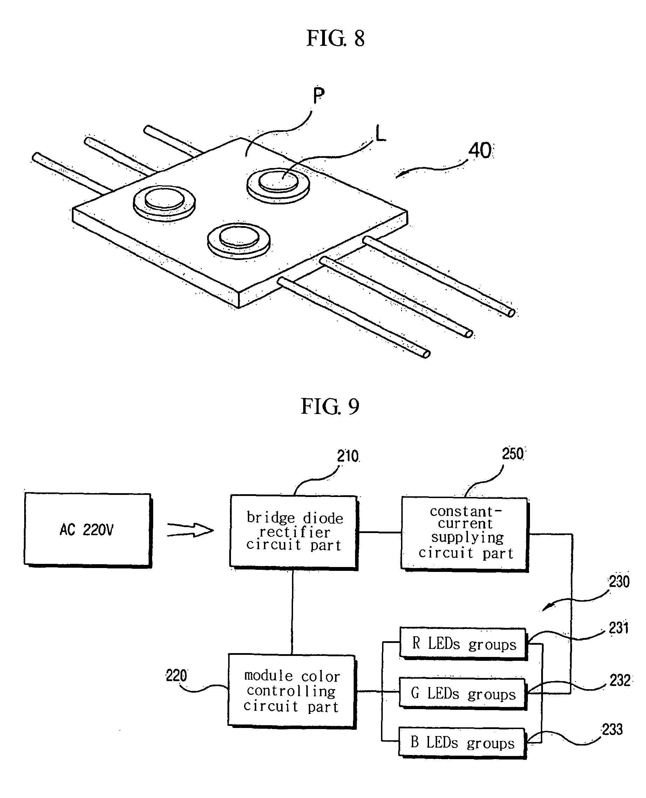

FIG. 8 is a perspective view illustrating a RGB color LED module in accordance with the present invention and FIG. 9 is a block diagram illustrating the RGB color LED module in accordance with the present invention.

Referring to the drawings, the RGB color LED module (hereinafter, a lighting module) includes a bridge diode rectifier circuit part 210, a module color controlling circuit part 220, a RGB LED driving part 230. Here, the power source for driving the lighting module is an AC power source. The external AC power source has a voltage of 220V-300V, a Korean Standard voltage.

The bridge diode rectifier circuit part 210 is a construction for receiving an AC power source for use as a driving source for the lighting system and converting the received AC power source into a rectifying power for driving the RGB LED (L) to be outputted. That is, in the bridge diode rectifier circuit part 210, four diodes are usually connected to each other as one set, so that it serves to perform the rectification of the AC and further description on this is omitted here.

The module color controlling circuit part 220 is a construction for generating any signals for creating a desired lighting color from the AC power source inputted through the bridge diode rectifier circuit part 210. That is, the module color controlling circuit part 220 is any controlling means for divisionally supplying the AC power source to each LED (L) of RGB and setting and controlling a lighting color obtained in the end.

Here, the signals generated in the module color controlling circuit part 220 serve to control the AC power source inputted into each RGB LED through PWM control and the intensity of light emitted from each RGB LED is controlled, so that the light of RGB colors is mixed, thereby setting and generating a desired lighting color.

In the RGB LED driving part 230, a plurality of LED elements (L) for emitting the light of RGB through the power source inputted by the module color controlling circuit part 220 is arranged. Here, the RGB LED elements (L) are divided into a R(red) LEDs group 231, a G(green) LEDs group 232, and a B(blue) LEDs group 233. Here, the RGB LEDs groups 231, 232, and 233 have a construction of the aggregation for emitting a red light, a green light, and a blue light respectively.

Especially, in the RGB LEDs groups 231, 232, and 233, a plurality of LED elements (L) is electrically connected in series and the power source inputted by the module color controlling circuit part 220 is distributed to each LED (L) to generate a drop of electric pressure, thereby driving each RGB LED elements (L) according to the desired voltage.

In order to more understand these constructions, one example is raised as follows. Since one LED (L) has about 3.2V, when RGB LED (L) of 60-72 are connected and aligned in series, the voltage of 192V-230V is dropped by means of each LED. Accordingly, the voltage of 192V-230V is subtracted from the voltage of 220V-300V and the remaining voltage can be utilized for current setting through the resistance (not shown, serially connected to the RGB LEDs).

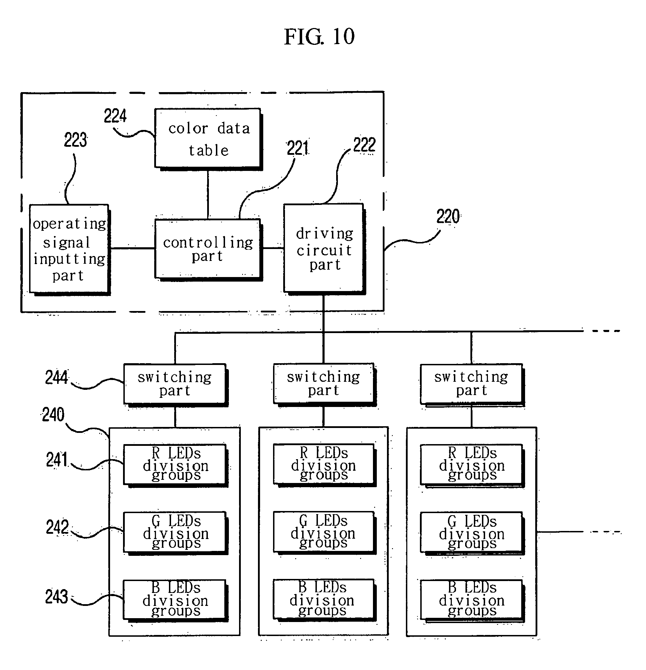

FIG. 10 is a block diagram illustrating a RGB color LED module having an extending function in accordance with the present invention.

With the construction as the above, the lighting module includes a plurality of unit modules 240 in order to express a desired lighting color through a combination of RGB colors.

In order to constitute the unit module 240, the RGB LEDs groups are divided into a plurality of RGB LEDs division groups 241, 242, and 243. Each of the RGB LEDs division groups 241, 242 and 243 divided as the above are mounted on each single PCB (S) to constitute the unit modules 240. A plurality of switching circuit parts 244 having identification means is mounted on the unit modules 240. Here, the identification means may be an electrical code or an electronic code and so on.

Concerning the construction of the unit modules, the module color controlling circuit part 220 includes a controlling part 221 and a driving circuit part 222.

The controlling part 221 is constructed to selectively and partially input the power source inputted through the bridge diode rectifier circuit part 210 into each of the unit modules 240. Especially, as described above, the controlling part 221 may be a microprocessor or a microcomputer of an advanced shape and so forth for generating any signals for creating a desired lighting color through a selective on/off of the RGB LEDs division groups 241, 242 and 243.

The driving circuit part 222 is constructed to receive any signals generated from the controlling part 221 and selectively drive the switching circuit parts 244 of the unit modules 240. That is, the driving circuit part 222 is a modulating circuit for modulating the inputted power source.

With the construction as the above, the module color controlling circuit part 220 can be provided with any means for adjusting the lighting color by request of the user. To this end, the module color controlling circuit part 220 includes an operating signal inputting part 223 and a color data table 224.

The operating signal inputting part 223 may be an operating panel of a keypad shape or a wire/wireless remote controller so as to selectively drive each of the unite modules 240 and input the lighting color of the selected unit module by the user.

The color data table 224 is a storage medium for selecting the corresponding unit module 240 according the signal inputted through the operating signal inputting part 223 and providing a lighting color data to the controlling part 221 by request of the user. The storage medium may be any memory such as a hard driver or a RAM so forth.

Also, the lighting module includes a constant-current supplying circuit part 250 for always supplying a constant current of the power source rectified and inputted through the bridge diode rectifier circuit part 210.

Here, where the plurality of the RGB LED (L) is connected in series, the forward voltages of each RGB LED are different from each other and the forward voltage is changed owing to the heat during light-emitting thereof. In this situation, the constant-current supplying circuit part 250 serves to control an over-current applied to the RGB LEDs.

The constant-current supplying circuit part 250 may be a transistor amplifier circuit, OP amplifier circuit, or a regulator circuit and the like.

### <Using State embodiment 1>

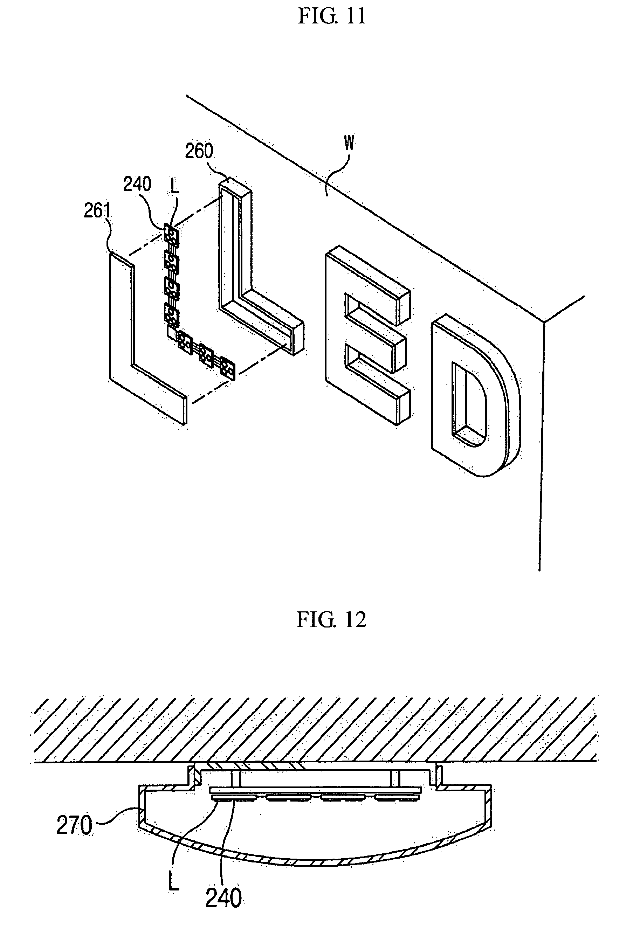

FIG. 11 is a perspective view illustrating an exemplary using state of an embodiment 1 in accordance with the present invention.

Referring to FIG. 11, the RGB color LED module of the using state embodiment 1 is connected to a plurality of unit modules 240 and applied to a channel sign for advertisement.

In order to implement this construction, in the channel sign, a channel member is manufactured in the form of a desiring word or logo and coupled to a wall (W), and the unit modules 240 corresponding to the shape of the channel member 260 is arranged and mounted on the inside of the channel member 260. Thereafter, a light transmitting panel 261 for penetrating the light emitted from the RGB LED (L) of the unit modules 24 and emitting it to outside is coupled to the front portion of the unit modules 240.

Thus, the lighting colors of the RGB LED (L) can be variously controlled through the channel sign according to the present invention, thereby obtaining an improved advertising impact.

### <Using State embodiment 2>

FIG. 12 is a sectional view illustrating an exemplary using state of an embodiment 2 in accordance with the present invention.

Referring to FIG. 12, the RGB color LED module of the using state embodiment 2 is applied to an indoor lamp used in a general home, an office, a place of business and so on.

In order to implement this construction, the plurality of unit modules 240 is connected to each other in the inside of the lamp formed mainly at an ceiling and a light transmitting cover 270 is formed on the front portion thereof.

Here, the lighting colors of the RGB LED (L) are variously controlled, so that the function of the interior lamp is given to the indoor lamp, thereby implementing an extended function thereof.

### <Using State embodiment 3>

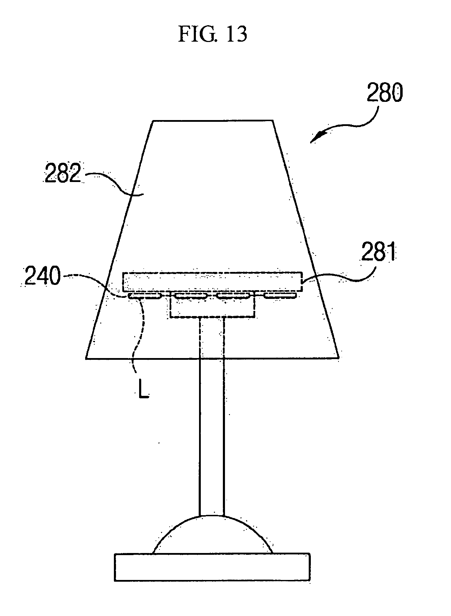

FIG. 13 is a sectional view illustrating an exemplary using state of an embodiment 3 in accordance with the present invention.

Referring to FIG. 13, the RGB color LED module of the using state embodiment 3 is applied to an indoor mood lamp of a desk lamp type.

In order to implement this construction, the plurality of unit modules 240 is connected to each other in the lamp portion 281 of a desk lamp 280 arranged on a bed or a bedroom for requiring a soft light and a lampshade 282 etc. is formed at the outside thereof, thereby performing the functions of an indoor decoration and a mood lamp.

Here, in the lighting device, various colors of the lighting device can be created according to the color control of the RGB LED (L). Especially, the lighting device used in the indoor can be utilized safely and stably through the constant-current supplying circuit part 250.

Although several exemplary embodiments of the present invention have been described for illustrative purposes, those skilled in the art will appreciate that various modifications, additions and substitutions are possible, without departing from the scope and spirit of the invention as disclosed in the accompanying claims.

## Claims

1. An AC-powered LED lighting system for receiving an AC power from outside and driving a LED module 20 having LED elements (L), comprising:
a power source part 40 for receiving the AC power source from outside for use as a driving source for the system;
a rectifying part 50 for rectifying the inputted power source through a bridge rectifier circuit 51; and
a LED driving part 60 configured as a serial connection of the LED elements (L) in response to the rectified power source and driving the LED elements (L) with a desired voltage.

2. The AC-powered LED lighting system as recited in claim 1, further comprising:
a LED lighting part 1 for receiving the AC power from outside and rectifying the inputted power for driving the LED elements (L) through the power source part 40 and the LED driving part 60, receiving operating signals inputted by an user, and controlling turning on or off and a luminance of the LED module 20, the LED lighting part 1 having a wireless communication module 2 for wirelessly receiving the user's operating signals; and
a controlling part 3 for inputting the operating signals so as to operate the LED lighting part 1 and having a wireless communication module 4 corresponding to another wireless communication module 2 of the LED lighting part 1.

3. The AC-powered LED lighting system as recited in claim 2, wherein the wireless communication module 2 for wirelessly receiving the user's operating signals, a microcomputer 5 for controlling turning on or off and driving luminance of the LED module 20, and a dimming circuit part 10 for controlling the luminance of the LED module 20 according to control signals of the microcomputer 5 are formed in one case (c).

4. The AC-powered LED lighting system as recited in claim 3, wherein, a switching part 6 for directly inputting the operating signals through the microcomputer 5 by the user is formed in one case (c).

5. The AC-powered LED lighting system as recited in any one of claims 1 through 4, wherein the controlling part 3 comprises a key inputting part 7 for transmitting the operating signals to the LED lighting part 1 through the wireless communication module 4 and a signal generating part 8 for generating the operating signals so as to transmit the inputted signals to the LED lighting part 1 through the wireless communication module 4.

6. An AC-powered LED lighting system comprising:
a sensing part 1' for detecting an existence of human, a brightness of natural light, and an elapsed time of a day in an applied space of the LED lighting system;
a microcomputer 2' for generating control signals for controlling a lighting luminance of LEDs in a respond to the detected signals inputted through the sensor 1';
a dimming circuit part 10 for generating driving signals for modulating the driving luminance of the LED elements (L) by PWM controlling the AC power applied from outside through the control signals inputted by the microcomputer 2'; and
a LED module 20 for performing a rectification for driving the LED elements (L) according to the driving signals generated through the dimming circuit part 10, supplying the rectified power source to the LED elements (L), and performing a function of a LED lighting according to the control signals of the microcomputer 2'.

7. The AC-powered LED lighting system as recited in claim 6, wherein the LED module 20 comprises:
a power source part 40 for receiving the AC power source from outside for use as a driving source for the system;
a rectifying part 50 for rectifying the inputted power source through a bridge rectifier circuit 51; and
a LED driving part 60 configured as a serial connection of the LED elements (L) and a resistance 61 in response to the rectified power source and driving the LED elements (L) with a desired voltage.

8. The AC-powered LED lighting system as recited in claim 6, wherein the dimming circuit part 10 comprises a timer 11' for performing a turning-on process in that the LED elements (L) are gradually lightened during a predetermined setting time and/or a turning-off process in that the LED elements (L) are gradually darkened during a predetermined setting time.

9. The AC-powered LED lighting system as recited in claim 8, wherein the sensing part 1' comprises:
a human detecting sensor 3' for detecting an existence of human in a space in which the LED lighting system is applied;
a light detecting sensor 4' for detecting an irradiation degree of a sunlight in the applied space of the LED lighting system according to a brightness of natural light; and
a time detecting sensor 5' for detecting an elapsed time of a day in connection with a clock and so on.

10. The AC-powered LED lighting system as recited in claim 6, further comprising; a power switching part 6' and a setting switching part 7' for inputting setting signals to the controlling part 2' so as to input on/off and setting status of the LED module 20, each switching part 6 and 7 being an operating panel electrically connected by cable and/or a remote controller electrically connected by wireless.

11. An AC-powered LED lighting system comprising:
a LED module 20 for receiving an AC power from outside and rectifying the AC power to be supplied so as to drive LED elements (L); and
a constant-current circuit part 10' formed in front of the LED module 20 before the power source is supplied to the LED module 20 or next to the rectifying part 50 after it rectifies the power source inputted to the LED module 20 so as to supply a constant current of the power source inputted to the LED module 20.

12. The AC-powered LED lighting system as recited in claim 11, wherein the LED module 20 comprises:
a power source part 40 for receiving the AC power source from outside for use as a driving source for the system;
a rectifying part 50 for rectifying the inputted power source through a bridge rectifier circuit 51; and
a LED driving part 60 configured as a serial connection of the LED elements (L) and a resistance 61 in response to the rectified power source and driving the LED elements (L) with a desired voltage.

13. The AC-powered LED lighting system as recited in claim 11 or 12, wherein the constant-current circuit part 10' comprises two current measuring instruments 11 for measuring a current capacity formed at an input portion of the power source and a supplying portion of the constant-current respectively, two current measuring instruments 11 being electrically connected to a comparator 12 for comparing each current capacity thereof, whereby a current capacity compared by the comparator 12 is converted into a numerical value to be displayed to outside through a displaying device 13.

14. The AC-powered LED lighting system as recited in claim 13, wherein the constant-current circuit part 10' comprises a microcomputer 14 for judging a supply of the over-current when it compares each current capacity detected by two current measuring instruments 11 through the comparator 12 and displaying results of the judgment to outside through a displaying device.

15. The AC-powered LED lighting system as recited in claim 14, wherein the microcomputer 14 comprises a dimming circuit part 10 for generating control signals for controlling the LED module 20 when the operating signals of the LED module 20 are inputted by an user through a key input part 16, whereby turning on or off the LED module 20 and controlling the luminance of the Led module 20 according to the inputted control signals.

16. An AC-powered LED lighting system comprising:
a bridge diode rectifier circuit part 210 for receiving an AC power source for use as a driving source for the lighting system and converting the received AC power source into a rectifying power for driving a RGB LED (L) to be outputted;
a module color controlling circuit part 220 for divisionally supplying the AC power source to each LED (L) of RGB inputted through the bridge diode rectifier circuit part 210 and setting and controlling a lighting color obtained in the end; and
a RGB LED driving part 230 having a plurality of LEDs (L) for emitting the light of RGB through the power source inputted by the module color controlling circuit part 220, each LEDs (L) having a R(red) LEDs group 231, a G(green) LEDs group 232, and a B(blue) LEDs group 233 electrically connected in series and the power source inputted by the module color controlling circuit part 220 being distributed to each LED (L) to generate a drop of electric pressure, whereby driving each RGB LEDs (L) according to a desired voltage.

17. The AC-powered LED lighting system as recited in claim 16, wherein the RGB LEDs groups are divided into a plurality of RGB LEDs division groups 241, 242, and 243 to constitute the unit module 240, each of the RGB LEDs division groups 241, 242 and 243 are mounted on each single PCB (S) to constitute unit modules 240, a plurality of switching circuit parts 244 having identification means is mounted on the unit modules 240, and the module color controlling circuit part 220 comprises a controlling part 221 for selectively and partially inputting the power source inputted through the bridge diode rectifier circuit part 210 into each of the unit modules 240 and for generating any signals for creating a desired lighting color through a selective on/off of the RGB LEDs division groups 241, 242 and 243 and a driving circuit part 222 for receiving the signals generated from the controlling part 221 and driving the switching circuit parts 244 of the unit modules 240.

18. The AC-powered LED lighting system as recited in claim 17, wherein the module color controlling circuit part 220 comprises:
an operating signal inputting part 223 for selectively driving each of the unite modules 240 and inputting the lighting color of the selected unit module by the user; and
a color data table 224 for selecting a corresponding unit module 240 according the signal inputted through the operating signal inputting part 223 and providing a lighting color data to the controlling part 221 by request of the user.

19. The AC-powered LED lighting system as recited in any one of claim 16 to 18, further comprising: a constant-current supplying circuit part 250 for always supplying a constant current of the power source rectified and inputted through the bridge diode rectifier circuit part 210.
